# EUROPEAN PATENT SPECIFICATION

(11) **EP 1 923 234 B1**
(45) Date of publication and mention of the grant of the patent: **23.12.2009**
(21) Application number: 07254372.1
(22) Date of filing: 05.11.2007
(51) Int. Cl.: B60C 11/04, B60C 11/11, B60C 11/12

(54) **Pneumatic tire**
Luftreifen
Pneumatique

(30) Priority: 15.11.2006 JP 2006309179
(43) Date of publication of application: 21.05.2008
(73) Proprietor: Bridgestone Corporation, Tokyo 104-8340 (JP)
(72) Inventor: Suganuma, Akira, Kodaira-shi Tokyo 187-8531 (JP)
(74) Representative: Whalley, Kevin

(56) References cited:
- EP-A- 0 654 365
- EP-A- 1 707 405
- JP-A- 8 183 312

## Description

The present invention relates to a pneumatic tire, in which a tread portion is provided with a plurality of blocks, and sipes are disposed in the blocks, and more particularly to a pneumatic tire such as, for example, a studless tire for a heavy load, which has achieved improvement in performance on icy and snowy roads and wear life (lifetime).

As the use of a spike tire provided with spikes or studs in a tread portion protruding from the surface thereof was regulated, a variety of pneumatic tires (so-called studless tire) that have achieved improvement in performance on icy and snowy roads without providing these have become widespread. As such a tread pattern of tires, a plurality of land portion rows is formed by a plurality of main grooves extending in a circumferential direction of a tire (circumferentially), which is partitioned into blocks by providing a plurality of lug grooves, or the like in this land portion row, and also a block pattern where various sipes are formed in each block is widely adopted. The block pattern is a pattern intended to improve performance on icy and snowy roads including traction and brake performance, etc. on icy and snowy roads, by forming a plurality of blocks and sipes on the surface of a tread portion to increase an edge amount (length), and enhancing the edge effect thereof.

For a pneumatic tire, for example, a studless tire for a heavy load such as a truck, a bus, etc., use conditions vary significantly depending on payload of a vehicle. When a vehicle is loaded with heavy payload, a ground-contacting area is increased to enhance performance on icy and snowy roads. On the contrary, when a vehicle is loaded with light payload, a ground-contacting area is decreased and thus performance on icy and snowy roads tends to be degraded. Hence, such a pneumatic tire ensures especially performance on icy and snowy roads when a vehicle is loaded with light payload by further increasing the number of blocks and sipes in a tread portion (Refer to Patent Document 1, Japanese Patent Application Laid-Open No. 8-197913).

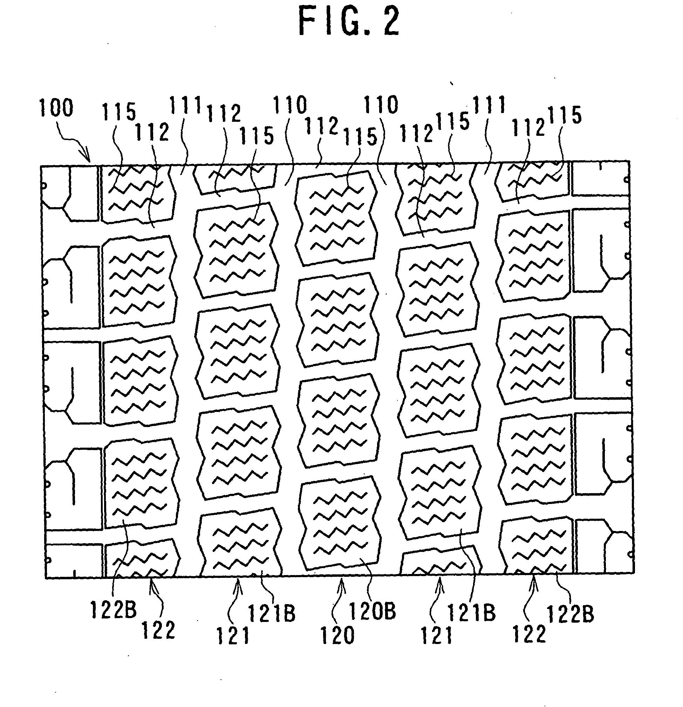

FIG. 2 is an expansion plan view illustrating one example of a tread pattern of such a conventional pneumatic tire, which is not described in the Patent Document, and illustrates diagrammatically one portion in a circumferential direction around the tire.
The pneumatic tire 100, as shown in the figure, includes four main grooves 110, 111 extending circumferentially around the tire (vertical direction in the figure) while being flexed in a zigzag manner, and five land portion rows 120, 121, 122 partitioned by these.

Also, in the pneumatic tire 100, a plurality of lug grooves 112 extending in an inclined configuration in the width direction of a tire (lateral direction in the figure) is disposed circumferentially around the tire with predetermined spacing within respective land portion rows 120, 121, 122, and these are partitioned into a plurality of blocks 120B, 121B, 122B; and within respective blocks 120B, 121B, 122B, sipes 115, both ends of which terminate in the inside thereof, are disposed in groups of a plurality of pieces (here, four pieces) so as to extend in almost the width direction of a tire while being flexed in a zigzag manner. Further, in the pneumatic tire 100, respective land portion rows 120, 121, 122 are partitioned into the blocks 120B, 121B, 122B in almost the same or a similar configuration, and their disposed locations (phase) are circumferentially displaced around the tire so as to provide an almost uniform arrangement on a tire tread.

In the pneumatic tire 100, the number of blocks (edge amount) in a tread portion is increased by making the disposed spacing of main grooves 110, 111 and lug grooves 112 to be relatively short, and also a lot of sipes 115 are disposed in respective blocks 120B, 121B, 122B, thereby enhancing the edge effect to be exerted on icy and snowy road surfaces and thus improving performance on icy and snowy roads.

However, as in the case of the conventional pneumatic tire 100, when respective blocks 120B, 121B, 122B are made to be smaller by increasing the number of blocks, or when the number of sipes 115 disposed therein is increased, the stiffness of blocks is lowered and wear tends to be likely to occur. As a result, wear resistance of a pneumatic tire 100 might be degraded, leading to wear-out of a tread portion at an early stage, and thus reducing its wear life. On the other hand, if main grooves 110, 111 and lug grooves 112 are made narrow (thin) to make blocks 120B, 121B, 122B larger, in order to cope with such a problem, a ground-contacting area increases in a ground-contacting surface, and also its stiffness is enhanced and wear resistance or the like is improved. Nevertheless, the effect of removing snow or the like in respective grooves 110, 111, 112 might be reduced, and consequently adequate performance on icy and snowy roads might not be obtained. Thus, in these conventional pneumatic tires, it is difficult to ensure compatibility between the performance on icy and snowy roads and the wear resistance and thus wear life to enhance both advantages, and thus further improvement is being sought.

Attention is also drawn to the disclosure of EP-0 654 365.

The present invention is made with a view to overcoming the conventional problem, and its object is to enhance wear resistance while improving performance on icy and snowy roads of a pneumatic tire, and thus to improve wear life of a pneumatic tire.

The invention provides a pneumatic tire having at least two central main grooves disposed on both sides of a tire equatorial plane extending in a circumferential direction of the tire and two outer main grooves disposed on both tread edge sides, thus disposing five rows of land portions that are partitioned by the central main grooves and outer main grooves; wherein a central land portion row disposed between the two central main grooves, first and second lug grooves disposed to be spaced apart in the circumferential direction of the tire, one end of which is opened to each of the main grooves on the central side and terminates in the central land portion rows, and a plurality of sipes connecting the first and second lug grooves to each other are disposed in the circumferential direction of the tire, and the central land portion row is partitioned into a plurality of large blocks ; and the large blocks are divided into a pair of small blocks by sipes extending in the circumferential direction of the tire while being flexed one or more times, and also there are disposed three to five sipes in the small blocks, extending in the tire width direction while being flexed one or more times, both ends of which terminate in the small blocks.

Preferably, the first lug grooves and second lug grooves extend in the tire width direction, or extend at an incline of 20° or less with respect to the tire width direction, and length in the tire width direction is 50 to 60% of the width in the tire width direction of the central land portion row.

Preferably, intermediate land portion rows disposed between the central main grooves and the outer main grooves are partitioned into a plurality of blocks by a plurality of lug grooves extending in the width direction of the tire, or extending at an incline of an angle of 20° or less in a direction opposite to the first and second lug grooves with respect to the width direction of the tire; and the blocks are divided into small blocks by sipes extending across the width direction of the tire, and also at least one sipe, the both ends of which terminate in the small blocks, extending in the width direction of the tire one or more times in a flexing manner, is disposed within the small blocks.

Further preferably, shoulder land portion rows disposed between the outer main grooves and tread periphery are partitioned into a plurality of blocks by a plurality of lug grooves extending in a direction which intersects with the outer main grooves; and at least one sipe, one end of which is opened to the outer main grooves and the other end terminates in the blocks, is disposed within the blocks, and also a length in the width direction of the tire of the sipe is formed to be 20 to 50 % of width in the width direction of the tire of the shoulder land portion rows.

All depths in a radial direction of the tire of the respective sipes are preferably within the range of 50 to 100% of the depth in the radial direction of the tire of the central main grooves and the outer main grooves.

The central main grooves and the outer main grooves are preferably straight grooves extending rectilinearly in the circumferential direction of the tire.
Preferably, respective circumferential locations of first and second lug grooves in the central land portion rows, lug grooves in the intermediate land portion rows, and lug grooves in the shoulder land portion rows are disposed out of alignment with each other in the circumferential direction of the tire.

Here, in the present invention, regarding the directions in which respective grooves and sipes extend, except for the cases where inclined angle or the like are specifically stated, "extending in a circumferential direction of a tire" means to extend not only in a direction parallel to the circumferential direction of a tire, but also in a direction with a directional element of the circumferential direction of a tire, such as extending at an incline of a predetermined angle with respect to the same direction, curving or flexing. Similarly, "extending in a width direction of a tire" means to extend not only in a direction parallel to the width direction of a tire, but also in a direction with a directional element of the width direction of a tire, such as extending at an incline of a predetermined angle with respect to the same direction, curving or flexing.

According to the present invention, it is possible to enhance wear resistance while improving performance on icy and snowy roads of a pneumatic tire, and thus it is possible to improve wear life of a pneumatic tire.

The invention will be further described with reference to the accompanying drawings, wherein

FIG. 1 is an expansion plan view illustrating a tread pattern of a pneumatic tire of the present invention.
FIG. 2 is an expansion plan view illustrating one example of a tread pattern of a conventional pneumatic tire.

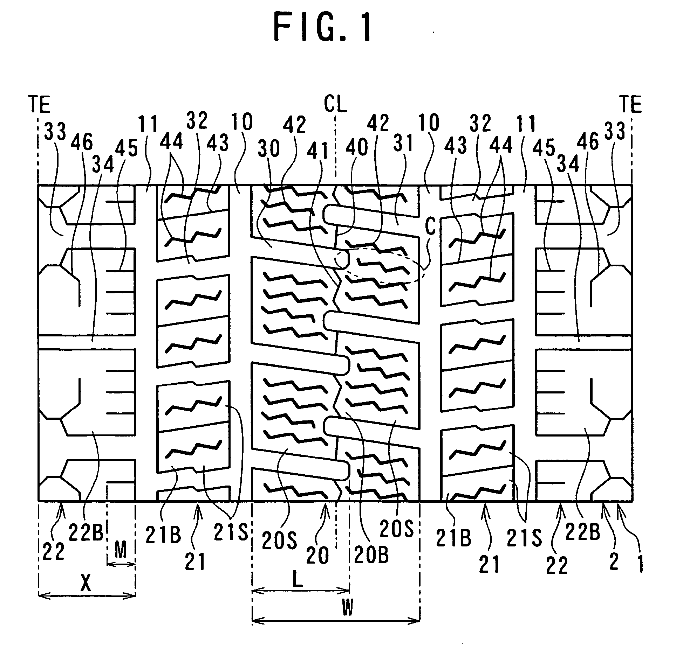

Hereinafter, one embodiment of the present invention will be described with reference to the drawing (FIG. 1). A pneumatic tire in the present embodiment is a studless tire, for example for heavy loads such as a truck, a bus, and for passenger cars, etc, which has construction of a known pneumatic tire, including bead cores arranged in a pair of tire bead portions, a carcass layer with at least one layer extending therebetween in a toroidal shape, a belt layer (or layers) arranged at an outer peripheral edge of the carcass layer in a tread portion, and tread rubber formed in a predetermined tread pattern.

FIG. 1 is an expansion plan view illustrating a tread pattern of a pneumatic tire 1 in the present embodiment, which illustrates diagrammatically one portion in the circumferential direction around the tire.
The pneumatic tire 1 includes, as illustrated in the figure, in a tread portion 2, at least four rows of main grooves 10, 11 extending circumferentially around a tire (vertical direction in the figure), and five rows of land portions 20, 21, 22 partitioned thereby and disposed extending circumferentially around the tire. Also, the pneumatic tire 1 includes a plurality of lug grooves 30, 31, 32, 33, 34 extending in a direction which intersects with the main grooves 10, 11 disposed within the land portion rows 20, 21, 22,which lug grooves extend almost rectilinearly in the width direction of the tire (lateral direction in the figure) or at an incline therewith, or in curving or flexing manner, and respective land portion rows 20, 21, 22 separated thereby are partitioned into a plurality of blocks 20B, 21B, 22B arranged in the circumferential direction of the tire.

Main grooves 10, 11 comprise two central main grooves 10 disposed on both sides of a tire equatorial plane (line) CL therebetween, and two outer main grooves 11 disposed outwardly in the width direction thereof toward the peripheral edges TE, which are disposed at predetermined and almost symmetrical lateral locations on both sides of the tire equatorial plane CL therebetween, respectively. Also, these main grooves 10, 11 are straight grooves extending circumferentially and linearly around the tire, and groove width in the width direction of the tire, and depth in a tire radial direction are formed almost substantially the same or in equal measure.

The land portion rows 20, 21, 22 comprise central land portion rows 20 located on the tire equatorial plane CL disposed between two central main grooves 10, two rows of intermediate land portions 21 disposed between the central main grooves 10 and the outer main grooves 11, two rows of shoulder land portions 22 disposed between the outer main grooves 11 and tread peripheral edges TE and located at the outermost (shoulder portion) side in the width direction of the tire. The widths in the width direction of the tire of these respective land portion rows 20, 21, 22 become narrower in order of the widest central land portion rows 20, shoulder land portion rows 22, and intermediate land portion rows 21 corresponding to the arrangement of main grooves 10, 11 partitioning these.

In the central land portion rows 20, a plurality of first lug grooves 30 and second lug grooves 31 extending in almost the width direction of the tire, two kinds of sipes 40, 41 extending almost circumferentially around the tire, and sipes 42 extending in almost the tire width direction, are disposed repeatedly at a predetermined pattern in the circumferential direction of the tire.

The first and second lug grooves 30, 31 are formed in a predetermined length, such that one ends of which are opened to respective central main grooves 10 at both sides (in the figure, the first lug grooves 30 are opened to the left-hand side and the second lug grooves 31 to the right-hand side of respective central main grooves 10), and the other ends terminate within central land portion rows 20, and disposed to be spaced apart from each other in the circumferential direction of the tire. Also, a plurality of first lug grooves 30 and second lug grooves 31 are disposed with a predetermined and almost the same spacing in the circumferential direction of the tire, respectively, and also their disposed locations (phase) are displaced circumferentially around the tire, and disposed alternately along the circumferential direction of the tire. Further, the first and second lug grooves 30, 31 are formed with widths slightly narrower than the widths of the main grooves 10, 11, and extend in the width direction of the tire from openings of respective central side to main grooves 10, or extend inclined at a predetermined angle with respect to the width direction of the tire, and terminate just on tire equatorial plane CL or at a predetermined location beyond the tire equatorial plane CL.

In the present embodiment, these first and second lug grooves 30, 31 are formed to extend almost linearly in the same direction with respect to the tire width direction, and inclined from the width direction of the tire at a given angle of 20° or less (0 to 20°). Also, length L thereof in the width direction of the tire is made equal to 50 to 60% of width W in the width direction of the tire of the central land portion rows 20, but, herein, made longer than 50%, thus causing to terminate at a location beyond the tire equatorial plane CL. In addition, as to gaps between the first lug grooves 30 and the second lug grooves 31, that are adjacent to each other in the circumferential direction of the tire, one gap is narrow while the other gap is wide. Thus, the first and second lug grooves 30, 31 are disposed so that these narrow and wide spacings are alternate along the circumferential direction of the tire.

Sipes 40, 41 that are disposed alternately along the circumferential direction of the tire are opened to the terminating portion sides of the first lug grooves 30 and the second lug grooves 31, respectively. These sipes 40, 41 are disposed at almost the central location of central land portion rows 20 on the tire equatorial plane CL, and are disposed between the first and the second lug grooves 30, 31 that are adjacent to each other in the circumferential direction of the tire, respectively, and consist of connecting sipes 40 for mainly connecting the first and the second lug grooves 30, 31 to each other, that are provided in the narrow gap between lug grooves 30, 31, and circumferential sipes 41 provided in the wide gap between lug grooves 30, 31 for mainly dividing respective blocks 20B within the central land portions 20 in the width direction of the tire. Each connecting sipe 40, extends rectilinearly in an almost circumferential direction of the tire, or at an incline therewith or in curving manner and so on, and is opened to respective lug grooves 30, 31 near the tire equatorial plane CL to connect these grooves. The sipe in conjunction with these grooves and these grooves as a whole traverse the central land portion row 20 in the width direction of the tire. On the other hand, each circumferential sipe 41 is formed in a zigzag or wavy or other flexed manner, and extends circumferentially or at an incline of a given angle in the same direction, while being flexed one (one flexing) or more times, and is opened in the proximity of the tire equatorial plane CL of respective lug grooves 30, 31.

In a pneumatic tire 1 of the present embodiment, a connecting sipe 40 and a pair of first and second lug grooves 30, 31 connected therethrough are disposed in a plurality of sets with a predetermined circumferential spacing, the central land portion row 20 is separated circumferentially by these, and partitioned into a plurality of relatively large blocks 20B in an almost S-letter shape in plan view. Also, respective large blocks 20B are divided into a pair of small blocks 20S by circumferential sipes 41 , that is a large block 20B is partitioned into a pair of small blocks 20S in an almost rectangular shape in plan view that are disposed in a circumferentially staggered pattern on both sides of the tire equatorial plane (line) CL therebetween, and also a plurality of sipes 42 are disposed within respective small blocks 20S. The sipes 42 extend almost parallel to the width direction of the tire, or at an incline therewith as a whole while being flexed one or more times, and they are made as closed type sipes where both ends terminate in the small blocks 20S. Here, three to five (four in the figure) sipes are disposed within respective small blocks 20S, with almost equal spacing in the circumferential direction of the tire.

On the other hand, within intermediate land portion rows 21 located at both outer sides in the tire width direction of the central land portion row 20, a plurality of lug grooves 32 extending rectilinearly in almost the width direction of the tire, or at an incline therewith, and two kinds of sipes 43, 44 are repeatedly disposed in a given pattern in the circumferential direction of the tire. Respective lug grooves 32 are formed to have narrower width than that of main grooves 10, 11, and to extend in the width direction of the tire, or at an incline of a given angle of 20° or less (0 to 20°) with respect to the width direction of the tire, and both ends thereof are opened to respective main grooves 10, 11 on both sides of intermediate land portion rows 21, and traverse the intermediate land portion rows 21 in the width direction of the tire. Here, the lug grooves 32 are inclined while being flexed in the same direction with respect to the width direction of the tire at both sides of the intermediate land portion rows 21, and also inclined in a direction opposite to the first and second lug grooves 30, 31 within the central land portion rows 20 with respect to the width direction of the tire, and are provided circumferentially in parallel thereto with almost the same predetermined spacing as the circumferential disposed spacing of the first and second lug grooves 30, 31.

The intermediate land portion row 21 is separated circumferentially by a plurality of lug grooves 32 to be partitioned into a plurality of blocks 21B in almost the same shape, and also respective blocks 21B are divided into small blocks 21S by sipes 43 extending across the blocks 21B in the width direction of the tire. Further, at least one sipe 44 (one sipe here) is disposed within respective small blocks 21S. The sipe 43 is disposed within the block 21B at an almost central location in the circumferential direction of the tire, and extend rectilinearly in the width direction of the tire or at an incline therewith or in curving manner and so on , and both ends are opened to main grooves 10, 11 at both sides. On the other hand, the sipe 44 is disposed at an almost central location in the circumferential direction of the tire within the small block 21S, extends almost parallel to the width direction of the tire or at an incline therewith and so on as a whole while being flexed one or more times, and it constitutes a closed type sipe where both ends thereof terminate in the small block 21S. Here, both sipes 43, 44 are formed to extend in almost the same direction as the lug grooves 32 within intermediate land portion row 21, and small blocks 21S within respective block 21B are designed to be formed in an almost point-symmetrical shape on both sides of the sipes 43 therebetween.

Also, within shoulder land portion rows 22 located in both outer sides in the width direction of the tire of respective intermediate land portion rows 21, a plurality of lug grooves 33, 34 extending in the direction which intersect with outer main grooves 11, respectively, and two kinds of sipes 45, 46 are disposed repeatedly in a fixed pattern in the circumferential direction of the tire. Respective lug grooves 33, 34 extend almost rectilinearly in the width direction, and both ends thereof are opened to outer main grooves 11 and tread edges TE, respectively, and traverse the shoulder land portion row 22 in the width direction of the tire. Of these lug grooves 33 , 34 , the lug groove 33 is formed to have a slightly wider groove width than those of the main grooves 10, 11, and such that the outer edge portion in the width direction of the tire be widened toward the same direction; while the other lug groove 34 is formed to have a narrower groove width than those of the main grooves 10, 11. Also, the lug grooves 33 , 34 are disposed alternately along the circumferential direction of the tire with almost the same fixed spacing as the disposed spacing of other respective lug grooves 30, 31, 32, and the shoulder land portion row 22 is separated circumferentially to partition it into a plurality of blocks 22B.

These blocks 22B are formed in an almost symmetrical shape on both sides of lug grooves 33, 34, and there is disposed at least one sipe 45 (three sipes here) extending from the edge portion at the outer main grooves 11 side, and one sipe 46 extending from the edge portion at the lug groove 33 side, respectively. The sipes 45 are one-sided opened sipes where one end thereof is opened to the outer main grooves 11, and the other end thereof terminates in the blocks 22B. Here, they are formed to extend almost rectilinearly in the width direction of the tire, and the length M thereof in the width direction of the tire is formed to be 20 to 50% of (axial) width X in the width direction of the tire of shoulder land portion rows 22, and they are disposed circumferentially with almost the same spacing. On the other hand, the sipe 46 at lug groove 33 side is opened to a widened portion of the lug groove 33 at one end thereof, and from there extends inclined toward the width direction of the tire, and is then flexed circumferentially, and extends almost rectilinearly in the same direction, and finally terminates in the block 22B at the other end thereof.

It should be noted that, in the pneumatic tire 1, the depths in the radial direction of the tire of respective sipes 40 to 46 as previously described, are all formed to fall within the range of 50 to 100% of the radial depths of main grooves 10, 11; and phases of first and second lug grooves 30, 31 within central land portion rows 20, lug grooves 32 within intermediate land portion rows 21, and lug grooves 33, 34 within shoulder land portion rows 22 are all displaced circumferentially by a predetermined distance, and respective circumferentially disposed locations of these are disposed each in a circumferentially displaced arrangement.

As discussed above, in the pneumatic tire 1 of the present embodiment, since central land portion rows 20 are partitioned into relatively large-sized and almost S-letter shaped in plane view, large blocks 20B by a plurality of sets of first and second lug grooves 30, 31 and connecting sipes 40, block stiffness thereof becomes higher than that of conventional ones, and it is also possible to ensure adequate edge amount (length). Also, since the circumferential sipe 41 that divides respective large blocks 20B into a pair of small blocks 20S is formed in a flexed pattern, when a force is applied during loading or rolling the sipe walls in a flexed shape will be brought into contact each other to restrain small blocks 20S from being deformed, thus enabling to increase the block stiffness. At the same time, in addition to the circumferential sipe 41, a plurality of sipes 42 are disposed within the respective small blocks 20S. Since these sipes are made as closed type in a flexed shape having much edge amount and giving only slight degradation in block stiffness, the reduction of the block stiffness can be also suppressed while enhancing edge effect by increasing the number of the sipes (length) within the large blocks.

Thus, in the pneumatic tire 1, since the block stiffness thereof can be enhanced without reducing edge amount of large blocks 20B and the number of sipes, adequate edge amount and edge effect to improve performance on icy and snowy roads can be obtained, and also the occurrence of wear associated with degradation of block stiffness can be suppressed, thus enabling to enhance wear resistance.

Also, in the pneumatic tire 1, intermediate land portion row 21 and shoulder land portion row 22 are partitioned into a plurality of blocks 21B, 22B by a plurality of lug grooves 32, 33 , 34 , respectively. Since a plurality of sipes 43 , 44, 45, 46 are disposed therein, adequate edge amount (edge effect) can be ensured as a studless tire. In addition, since lug grooves 32 of intermediate land portion row 21 are inclined in an opposite direction with respect to the width direction of the tire to respective lug grooves 30, 31 of central land portion rows 20, edge effect is exerted for different directions too, and thus performance on icy and snowy roads can be effectively improved.

Further, each block 21B of intermediate land portion rows 21 is divided into small blocks 21S by sipes 43, and at least one closed type sipe 44 in a flexed shape is disposed within each of small blocks 21S. As a result, edge effect can be enhanced while suppressing the degradation of stiffness of the block 21B. On the other hand, within each block 22B of shoulder land portion row 22, there is disposed at least one one-sided opened sipe 45 that is opened only to outer main groove 11. Such one-sided opened sipe 45, however, can ensure adequate block stiffness since it only slightly degrades block stiffness. At the same time, since outer main groove 11 side of the shoulder land portion row 22 is the ground contacting portion even when ground-contacting area decreases at the time of empty running or light payload or the like, performance on icy and snowy roads can be maintained even in such situations by virtue of edge effect by these one-sided opened sipes 45.

Therefore, according to a pneumatic tire 1 in the present embodiment, wear resistance can be enhanced while improving performance on icy and snowy roads thereof, and thus improved wear life of the pneumatic tire 1 can be obtained. Also, in the pneumatic tire 1, since circumferential disposed locations (phase) of lug grooves 30, 31, 32, 33, 34 are arranged in a circumferentially staggered configuration from one groove to the next, respective blocks 20B, 21B, 22B, etc. are disposed in different circumferential locations, and these blocks are adapted to contact the ground in sequence during tire rolling to permit edge effect to be continually exerted, and thus constant performance on icy and snowy roads can be obtained.

Here, in the case where sipes 42 disposed within small blocks 20S of central land portion rows 20 are made to be less than three, adequate edge effect cannot be obtained, and performance on icy and snowy roads might be degraded. On the contrary, in the case of more than five sipes, block stiffness might be decreased, and thus wear resistance and wear life might decline. Therefore, it is desirable to dispose three to five sipes 42 within small blocks 20S.

Also, in the case where respective lug grooves 30, 31 within central land portion row 20 and lug grooves 32 within intermediate land portion rows 21 are inclined at an angle greater than 20° with respect to the width direction of the tire, adequate edge effect is not exerted at the time of tire rolling or the like, but traction performance on icy and snowy roads surfaces and brake performance, etc. might be decreased, and thus performance on icy and snowy roads might be lowered. Accordingly, it is desirable to form these lug grooves 30, 31, 32 so as to extend in the width direction of a tire, or at an incline of angle of 20° or less with respect to the width direction the tire.

Further, when the length L in the width direction of the tire of respective lug grooves 30, 31 within central land portion row 20 is less than 50% of the width W in the width direction of the tire of the central land portion row 20, volume of the lug grooves 30, 31 within the central land portion row 20 decreases, and thus performance on snowy roads is lowered by reduced snow-removing ability thereof, and also performance on icy roads might be degraded as edge amount becomes smaller. On the contrary, in the case of more than 60% of the width W, a stiffness of a region (C region in FIG.1) sandwiched between terminating portions of respective lug grooves 30, 31 of the central land portion row 20 and the central main grooves 10 opposed thereto is locally degraded and biased (partial) wear might occur in the vicinity of the same region. Therefore, it is desirable to form the length L of respective lug grooves 30, 31 to be 50 to 60% of the width W of the central land portion row 20.

In addition, in the case where the length M in the width direction of the tire of sipes 45 within the shoulder land portion rows 22 is made less than 20% of the width X in the width direction of the tire of the shoulder land portion rows 22, when a ground-contacting area of a pneumatic tire 1 is small in such a condition as an empty vehicle or the like, the terminating portions of the sipes 45 do not reach the outermost ground contacting end in the width direction of the tire, adequate edge effect can not be obtained, and the effect of improving performance on icy and snowy roads might become small. On the contrary, in the case of more than 50%, stiffness of the blocks 22B on which the sipes 45 have been disposed will be degraded and biased wear might be likely to occur. Therefore, it is desirable to form the length M of the sipes to be a length of 20 to 50% of the width of the shoulder land portion rows 22.

Also, in the case where the depth in a radial direction of the tire (radial depth) of respective sipes 40 to 46 is made shallower than 50% of the radial depth of the main grooves 10, 11, the deformation of the blocks 20B, 21B, 22B on which they are formed will become smaller than necessary, and performance on icy and snowy roads (particularly traction performance) might be degraded, including that so-called losing traction is likely to occur at the time of driving on icy and snow-covered roads. On the contrary, in the case of making deeper than 100%, ground-contacting ability will be degraded since the stiffness of respective blocks will become too low. As a result, traction performance, brake performance, and other performances on icy and snowy roads will be degraded, and thus there is possibility that adequate wear (abrasion) resistance can not be secured. Therefore, it is desirable to form respective sipes 40 to 46 in depth within the range of 50 to 100% of the depth of the main grooves 10, 11.

It is noted that, in the present embodiment, respective main grooves 10, 11 are formed as straight grooves extending circumferentially and rectilinearly, but these may be formed to extend in other ways, that is formed to extend circumferentially in flexing manner for example, in zigzagging or waving manner and so on. However, in the case where the main grooves 10, 11 are formed as straight grooves, their snow-removing ability becomes higher, and the performance on snow-covered roads of a pneumatic tire 1 can be further improved. For this reason, the main grooves 10, 11 are preferably formed in this manner. Also, if at least of sipe 45 is formed in each block 22B of shoulder land portion row 22, the effect of improving performance on icy and snowy roads at the time of light payload as described above will be exerted. In the case where a plurality of sipes 45 (e.g. sipes pieces, etc.) are disposed, performance on icy and snowy roads can be effectively improved, which is more desirable. Further, in the pneumatic tire 1, although sipes 40, 41 within the central land portion row 20 are disposed on the tire equatorial plane (line) CL, they may be disposed at a location displaced in the width direction of the tire (laterally), or at other locations in the width direction of the tire (lateral locations).

In order to verify the effect of the present invention, a pneumatic tire 1(hereinafter referred to as applied product) of an example provided with a tread pattern (refer to FIG. 1) as described above, and a pneumatic tire 100 (hereinafter referred to as conventional product) of a conventional example (Comparative Example) provided with a conventional tread pattern (refer to FIG. 2) as described above were built as a prototype, and then comparative tests for performance on icy and snowy roads and wear resistance were conducted under the following conditions. Applied and conventional products are both radial tires for trucks and buses of tire size 11R22.5-1 6PR as specified in JATMA YEAR BOOK (2006, THE Japan Automobile Tyre Manufacturers Association, Inc.)

Each test was conducted in such a state that applied and conventional products were attached to a rim of size 7.50 at an air pressure of 900 kPa, and installed to a vehicle with 2-D-4 (single shaft of 2-wheel for front wheel, 2-shaft of drive 4-wheel and 4-wheel for rear wheels), and normal load was loaded. Also, performance on icy and snowy roads was evaluated after testing traction and brake performance of applied and conventional products when they were new products.

The traction performance test was evaluated by causing a vehicle to start from halt condition on a test course (snow-covered road surface), measuring starting accelerations, and comparing the measurement results with reference to the conventional product. Also, brake performance test was evaluated by measuring brake distance when a full brake was applied to a vehicle traveling at a predetermined speed on a test course (icy road surface) to determine decelerating speeds, and comparing the results with reference to the conventional product. On the other hand, wear resistance test was evaluated by measuring tread wear amounts since new product after a vehicle has traveled on a test course (dry road surface) by a predetermined distance under the same condition, and comparing the results with reference to the conventional product.

Table 1 shows the results of these tests. Each table is shown with index wherein the result of conventional product is 100. The greater value indicates that better results and higher performance will be achieved.

**[Table 1]**

| | CONVENTIONAL PRODUCT | APPLIED PRODUCT |
|---|---|---|
| TRACTION PERFORMANCE INDEX | 100 | 120 |
| BRAKE PERFORMANCE INDEX | 100 | 115 |
| WEAR RESISTANCE INDEX | 100 | 113 |

As a result, as shown in Table 1, the traction performance index is significantly as large as 120 for applied product versus 100 for conventional product, and thus it is found that traction performance on snow-covered roads has been greatly improved. Also, the brake performance index is as large as 115 for applied product versus 100 for conventional product, and thus it is found that brake performance on icy road surface has been improved. Further, the wear resistance index is as large as 113 for applied product versus 100 for conventional product, and thus it is found that wear resistance has been improved.

From the results as described above, according to the present invention, it is possible to enhance wear resistance of a pneumatic tire 1 while improving the performance on icy and snowy roads, and thus wear life of a pneumatic tire 1 can be improved.

## Claims

1. A pneumatic tire (1) having at least two central main grooves (10) disposed on both sides of a tire equatorial plane (CL) extending in a circumferential direction of the tire and two outer main grooves (11) disposed on both tread edge sides (TE), thus disposing five rows of land portions (22, 21, 20, 21, 22) that are partitioned by the central main grooves and the outer main grooves;
wherein a central land portion row (20) disposed between the two central main grooves (10) is partitioned into a plurality of large blocks (20B) by first and second lug grooves (30, 31) disposed to be spaced apart in the tire circumferential direction, one end of which is opened to each of the central main grooves (10) and terminates in the central land portion row (20), and a plurality of sipes (40) connecting the first and second lug grooves to each other are disposed in the tire circumferential direction;
**characterized in that** the large blocks (20B) are divided into a pair of small blocks (20S) by sipes (41) extending in the tire circumferential direction while being flexed one or more times, and also there are disposed three to five sipes (42)in the small blocks (20S), extending in the tire width direction while being flexed one or more times, both ends of which terminate in the small blocks.

2. A pneumatic tire as claimed in claim 1,
wherein the first lug grooves (30) and the second lug grooves (31) extend in the tire width direction, or extend at an incline of 20° or less with respect to the tire width direction, and length in the tire width direction is 50 to 60% of the width in the tire width direction of the central land portion row (20).

3. A pneumatic tire as claimed in claim 1 or 2,
wherein intermediate land portion rows (21) disposed between the central main grooves (10)and the outer main grooves (11) are partitioned into a plurality of blocks (21B) by a plurality of lug grooves (32) extending in the tire width direction, or extending at an incline of 20° or less in a direction opposite to the first and second lug grooves with respect to the width direction of the tire; and
the blocks (21B) are divided into small blocks (21S) by sipes (43) extending across the width direction of the tire, and also at least one sipe (44), both ends of which terminate in the small blocks, extending in the width direction of the tire one or more times in a flexing manner, is disposed within the small blocks.

4. A pneumatic tire as claimed in any of claims 1 to 3,
wherein shoulder land portion rows (22) disposed between the outer main grooves (11) and tread edges (TE) are partitioned into a plurality of blocks (22B)by a plurality of lug grooves (33, 34) extending in the direction which intersects with the outer main grooves; and
at least one sipe (45) is disposed within the blocks (22B), one end of which is opened to the outer main grooves (11) and the other end terminates in the blocks, and also a length in the tire width direction of the sipe is formed to be 20 to 50 % of width in the width direction of the tire of the shoulder land portion rows (22).

5. A pneumatic tire as claimed in any of claims 1 to 4,
wherein all depths in a radial direction of the tire of the respective sipes are within the range of 50 to 100% of the depth in the radial direction of the tire of the central main grooves (10)and the outer main grooves (11).

6. A pneumatic tire as claimed in any of claims 1 to 5,
wherein the central main grooves (10) and the outer main grooves (11) are straight grooves extending rectilinearly in the circumferential direction of the tire.

7. A pneumatic tire as claimed in any of claims 4 to 6,
wherein respective circumferential locations of first and second lug grooves (30, 31) in the central land portion row (20), lug grooves (32) in the intermediate land portion rows (21), and lug grooves (33, 34) in the shoulder land portion rows (22) are disposed out of alignment with each other in the circumferential direction of the tire.

## Patentansprüche

1. Luftreifen (1) mit mindestens zwei mittigen Hauptrillen (10), die auf beiden Seiten einer Äquatorialebene (CL) eines Reifens angeordnet sind, die sich in einer Umfangsrichtung des Reifens erstreckt, und zwei äußeren Hauptrillen (11), die auf beiden Laufflächenrandseiten (TE) angeordnet sind, wodurch fünf Reihen von Stegabschnitten (22, 21, 20, 21, 22) angeordnet sind, die durch die mittigen Hauptrillen und die äußeren Hauptrillen unterteilt werden;
wobei eine mittige Stegabschnittsreihe (20), die zwischen den zwei mittigen Hauptrillen (10) angeordnet ist, in eine Vielzahl von großen Blöcken (20B) durch erste und zweite Stollenrillen (30, 31) unterteilt wird, die in der Umfangsrichtung des Reifens beabstandet angeordnet sind, wobei ein Ende einer jeden zu einer jeden der mittigen Hauptrillen (10) geöffnet ist und in der mittigen Stegabschnittsreihe (20) endet, und wobei eine Vielzahl von Lamellen (40), die die ersten und zweiten Stollenrillen miteinander verbinden, in der Umfangsrichtung des Reifens angeordnet sind;
**dadurch gekennzeichnet, dass** die großen Blöcke (20B) in ein Paar kleine Blöcke (20S) durch Lamellen (41) unterteilt werden, die sich in der Umfangsrichtung des Reifens erstrecken, während sie ein- oder mehrmals gebeugt sind, und dass ebenfalls drei bis fünf Lamellen (42) in den kleinen Blöcken (20S) angeordnet sind, die sich in der Breitenrichtung des Reifens erstrecken, während sie ein- oder mehrmals gebeugt sind, wobei deren beiden Enden in den kleinen Blöcken enden.

2. Luftreifen nach Anspruch 1,
bei dem sich die ersten Stollenrillen (30) und die zweiten Stollenrillen (31) in der Breitenrichtung des Reifens oder unter einer Neigung von 20° oder weniger mit Bezugnahme zur Breitenrichtung des Reifens erstrecken und die Länge in der Breitenrichtung des Reifens 50 bis 60 % der Breite in der Reifenbreitenrichtung der mittigen Stegabschnittsreihe (20) beträgt.

3. Luftreifen nach Anspruch 1 oder 2,
bei dem Zwischenstegabschnittsreihen (21), die zwischen den mittigen Hauptrillen (10) und den äußeren Hauptrillen (11) angeordnet sind, in eine Vielzahl von Blöcken (21B) durch eine Vielzahl von Stollenrillen (32) unterteilt werden, die sich in der Breitenrichtung des Reifens oder unter einer Neigung von 20° oder weniger in einer Richtung entgegengesetzt den ersten und zweiten Stollenrillen mit Bezugnahme auf die Breitenrichtung des Reifens erstrecken; und
die Blöcke (21B) in kleine Blöcke (21S) durch Lamellen (43) unterteilt werden, die sich über die Breitenrichtung des Reifens erstrecken, und ebenfalls mindestens eine Lamelle (44), deren beiden Enden in den kleinen Blöcken enden, die sich in der Breitenrichtung des Reifens ein- oder mehrmals in gebeugter Weise erstreckt, innerhalb der kleinen Blöcke angeordnet ist.

4. Luftreifen nach einem der Ansprüche 1 bis 3,
bei dem Schulterstegabschnittsreihen (22), die zwischen den äußeren Hauptrillen (11) und den Laufflächenrändern (TE) angeordnet sind, in eine Vielzahl von Blöcken (22B) durch eine Vielzahl von Stollenrillen (33, 34) unterteilt werden, die sich in der Richtung erstrecken, die sich mit den äußeren Hauptrillen schneidet; und
bei dem mindestens eine Lamelle (45) innerhalb der Blöcke (22B) angeordnet ist, von der ein Ende zu den äußeren Hauptrillen (11) geöffnet ist und das andere Ende in den Blöcken endet, und ebenfalls eine Länge in der Reifenbreitenrichtung von der Lamelle ausgebildet wird, so dass sie 20 bis 50 % der Breite in der Reifenbreitenrichtung von den Schulterstegabschnittsreihen (22) beträgt.

5. Luftreifen nach einem der Ansprüche 1 bis 4,
bei dem alle Tiefen in einer radialen Richtung des Reifens der betreffenden Lamellen innerhalb des Bereiches von 50 bis 100 % der Tiefe in der radialen Richtung des Reifens der mittigen Hauptrillen (10) und der äußeren Hauptrillen (11) liegen.

6. Luftreifen nach einem der Ansprüche 1 bis 5,
bei dem die mittigen Hauptrillen (10) und die äußeren Hauptrillen (11) gerade Rillen sind, die sich geradlinig in der Umfangsrichtung des Reifens erstrecken.

7. Luftreifen nach einem der Ansprüche 4 bis 6,
bei dem die jeweiligen peripheren Stellen der ersten und zweiten Stollenrillen (30, 31) in der mittigen Stegabschnittsreihe (20), der Stollenrillen (32) in den Zwischenstegabschnittsreihen (21) und der Stollenrillen (33, 34) in den Schulterstegabschnittsreihen (22) nicht miteinander ausgerichtet in der Umfangsrichtung des Reifens angeordnet sind.

## Revendications

1. Bandage pneumatique (1), comportant au moins deux rainures principales centrales (10) agencées sur les deux côtés d'un plan équatorial du bandage pneumatique (CL), s'étendant dans une direction circonférentielle du bandage pneumatique, et deux rainures principales externes (11) agencées sur les deux côtés de bordure de la bande de roulement (TE), formant ainsi cinq rangées de parties d'appui (22, 21, 20, 21, 22) séparées par les rainures principales centrales et les rainures principales externes ;
une rangée de parties d'appuis centrales (20), agencée entre les deux rainures principales centrales (10) étant séparée en plusieurs grands pavés (20B) par des première et deuxième rainures de barrette (30, 31) agencées de sorte à être espacées dans la direction circonférentielle du bandage pneumatique, une extrémité étant ouverte vers chacune des rainures principales centrales (10) et se terminant dans la rangée des parties d'appui centrales (20), et plusieurs lamelles (40) connectant les premières et deuxièmes rainures de barrette les unes aux autres étant agencées dans la direction circonférentielle du bandage pneumatique ;
**caractérisé en ce que** les grands pavés (20B) sont divisés en une paire de petits pavés (20S) par des lamelles (41) s'étendant dans la direction circonférentielle du bandage pneumatique, et étant fléchies une ou plusieurs fois, trois à cinq lamelles (42) étant en outre agencées dans les petits pavés (20S), s'étendant dans la direction de la largeur du bandage pneumatique et étant fléchies une ou plusieurs fois, leurs deux extrémités se terminant dans les petits pavés.

2. Bandage pneumatique selon la revendication 1,
dans lequel les premières rainures de barrette (30) et les deuxièmes rainures de barrette (31) s'étendent dans la direction de la largeur du bandage pneumatique, ou s'étendent à un angle d'inclinaison de 20° ou moins par rapport à la direction de la largeur du bandage pneumatique, la longueur dans la direction de la largeur du bandage pneumatique représentant 50 à 60% de la largeur de la rangée des parties d'appui centrales (20), dans la direction de la largeur du bandage pneumatique.

3. Bandage pneumatique selon les revendications 1 ou 2,
dans lequel les rangées des parties d'appui intermédiaires (21) agencées entre les rainures principales centrales (10) et les rainures principales externes (11) sont séparées en plusieurs pavés (21B) par plusieurs rainures de barrette (32), s'étendant dans la direction de la largeur du bandage pneumatique, ou s'étendant à un angle d'inclinaison de 20° ou moins dans une direction opposée aux premières et deuxièmes rainures de barrette par rapport à la direction de la largeur du bandage pneumatique ; et
les pavés (21B) étant divisés en de petits pavés (21S) par des lamelles (43) s'étendant à travers la direction de la largeur du bandage pneumatique, au moins une lamelle (44), dont les deux extrémités se terminent dans les petits pavés, s'étendant dans la direction de la largeur du bandage pneumatique, et étant fléchie une ou plusieurs fois, étant en outre agencée dans les petits pavés.

4. Bandage pneumatique selon l'une quelconque des revendications 1 à 3,
dans lequel des rangées de parties d'appui d'épaulement (22) agencées entre les rainures principales externes (11) et les bords de la bande de roulement (TE), sont séparées en plusieurs pavés (22B) par plusieurs rainures de barrette (33, 34), s'étendant dans la direction coupant les rainures principales externes ; et
au moins une lamelle (45) étant agencée dans les pavés (22B), une de ses extrémités étant ouverte vers les rainures principales externes (11) et son autre extrémité se terminant dans les pavés, une longueur de la lamelle, dans la direction de la largeur du bandage pneumatique, étant dimensionnée de sorte à représenter 20 à 50% de la largeur des rangées de parties d'appui d'épaulement (22), dans la direction de la largeur du bandage pneumatique.

5. Bandage pneumatique selon l'une quelconque des revendications 1 à 4,
dans lequel toutes les profondeurs des lamelles, dans une direction radiale du bandage pneumatique, sont comprises dans l'intervalle représentant 50 à 100% de la profondeur des rainures principales centrales (10) et des rainures principales externes (11), dans la direction radiale du bandage pneumatique.

6. Bandage pneumatique selon l'une quelconque des revendications 1 à 5,
dans lequel les rainures principales centrales (10) et les rainures principales externes (11) sont des rainures droites s'étendant de manière rectiligne dans la direction circonférentielle du bandage pneumatique.

7. Bandage pneumatique selon l'une quelconque des revendications 4 à 6,
dans lequel les emplacements circonférentiels respectifs des premières et deuxièmes rainures de barrette (30, 31), dans la rangée des parties d'appui centrales (20), des rainures de barrette (32) dans les rangées des parties d'appui intermédiaires (21), et des rainures de barrette (33, 34) dans les rangées des parties d'appui d'épaulement (22) ne sont pas alignés les uns par rapport aux autres dans la direction circonférentielle du bandage pneumatique.
